# EUROPEAN PATENT SPECIFICATION

(11) **EP 4 104 666 B1**
(45) Date of publication and mention of the grant of the patent: **22.01.2025**
(21) Application number: 21180155.0
(22) Date of filing: 17.06.2021
(51) Int. Cl.: A01D 41/127

(54) **MONITORING GRAIN TANK FILLING LEVEL**
FÜLLSTANDSÜBERWACHUNG FÜR GETREIDETANKS
SURVEILLANCE DE NIVEAU DE REMPLISSAGE DE RÉSERVOIR DE GRAIN

(43) Date of publication of application: 21.12.2022
(73) Proprietor: CNH Industrial Belgium N.V., 8210 Zedelgem (BE)
(72) Inventor: Vanlerberghe, Jasper, 8211 Aartrijke (BE); Verhoeven, Marcel, 8210 Zedelgem (BE)
(74) Representative: CNH Industrial IP Department

(56) References cited:
- EP-A1- 3 643 159
- WO-A1-2011/104085
- US-A1- 2020 281 118
- US-B2- 11 006 577

## Description

### TECHNICAL FIELD

The present invention relates to a method of determining a crop tank filling level in an agricultural harvester. The present invention further relates to an agricultural harvester employing such a method.

### BACKGROUND

Combine harvesters, also commonly called 'combines', harvest grain from the field and separate the grain kernels from all the other material in the harvested crop. This other material is commonly named 'material other than grain' or MOG and comprises, e.g., straw, leaves, ears and chaff. This separation involves different process stages. In a threshing section, the grain kernels are separated from the chaff and the plant. A subsequent separation section further separates the straw and other larger parts in the grain-MOG mixture from the smaller grain kernels and the chaff. Then, a cleaning section, typically comprising a blower for blowing away the light-weight chaff and a set of reciprocating sieves for only letting through the grain kernels, separates the heavier grain kernels from the lighter chaff.

During the threshing, separation and cleaning of the harvested grain, the grain moves downwards from the threshing and separation sections to the cleaning section. In the cleaning sections, the grain kernels typically fall down through an upper and a lower sieve, onto an inclined grain collection plate, before being collected in a clean grain auger at or near the bottom of the combine harvester chassis. A grain elevator then picks up the clean grain and transports it upwards for collection in a large clean grain tank that is installed on top of the combine harvester. The grain elevator is typically formed by a chain or belt driven loop comprising a plurality of paddles for picking up the clean grain near a downstream end of the clean grain auger and to transport it upwards to the top of the grain elevator, where the clean grain is loaded into the clean grain tank, possibly via one or more further augers.

Modern combine harvesters can have grain tanks that have a capacity of well over 10,000 litres, which may be sufficient to store all the grain harvested in an area of about 1 hectare. When the grain tank is full, the grain is unloaded into a grain cart or truck via an unloading tube. To avoid overflowing of the grain tank or unnecessary interruption of the harvesting process, it is important to have an empty grain cart or truck available next to the combine harvester when the grain tank reaches its full capacity. For an efficient harvesting process, it thus is important to know the exact filling level of the grain tank. Accurate knowledge of the filling level makes it possible to only unload the grain tank when the tank is really full, without having to wait for the haul vehicle to arrive and without risking overfilling the grain tank and losing grain. When combining precise knowledge of the current filling level with timely communication with the haul vehicles, also efficient planning of the haul vehicle operations becomes possible, thereby minimising fuel consumption and ground compaction.

Some attempts to provide for accurate monitoring of the grain tank filling level have been published in the past. For example, European patent application EP 3 150 048 A1 discloses a grain tank filling level sensor system with mechanical sensors for detecting when the grain tank is filled up to at least a lower or an upper filling level. Crop flow sensors measure crop volumes flowing through the feeder towards the grain tank and from the grain tank through the unload tube. The mechanical sensors in the grain tank are used for calibrating the crop flow sensors.

Similarly, international patent application WO 2010/002789 A1 discloses a grain tank with a level sensor that is triggered when the grain tank is filled up to at least a reference level. In addition thereto, an input sensor in the form of a mass flow sensor measures a mass of crop flowing into the grain tank. An output sensor may measure a rotation speed of an unload auger that is used for unloading the harvested crop from the grain tank. Based on data derived from the input and output sensor, a grain tank filling level is estimated. Each time the level sensor is triggered, this is used for adjusting the estimate.

In practice, these known systems for monitoring the grain tank filling level have, however, shown to be insufficiently accurate and reliable. On top of that, the sensor needed for these systems are often complex and expensive. E.g., the mass flow sensor used in WO 2010/002789 A1 has the disadvantage that its mass readings need to be converted to volumes in order to be able to say something useful about the grain tank filling level. This conversion is often inaccurate. In addition thereto, the filling level estimates are only adjusted when the reference level sensors are triggered. Depending on the circumstances, the filling level estimates can be highly inaccurate when between two reference levels. Other grain tank filling level systems make use of video cameras and ultrasound systems to monitor the contents of the grain tank, but have the disadvantage that they require expensive hardware and may lead to inaccurate measurements in situations of low visibility, e.g. due to excessive dust.

It is an aim of the present invention to address one or more disadvantages associated with the prior art.

### SUMMARY OF THE INVENTION

According to an aspect of the invention there is provided a method of determining a crop tank filling level in an agricultural harvester. The method comprises a step of receiving a first trigger signal from a first crop tank sensor, the first trigger signal corresponding to a first crop tank filling level. After receiving the first trigger signal, a harvesting yield is estimated based on a travelled distance and a predetermined average yield parameter. A current crop tank filling level is calculated based on the first crop tank filling level and the estimated harvesting yield. The method further comprises receiving a second trigger signal from a second crop tank sensor, the second trigger signal corresponding to a second crop tank filling level. The second crop tank filling level is different from the first crop tank filling level. Upon receiving the second trigger signal, the predetermined average yield parameter is calibrated based on the calculated current crop tank filling level and the first and second crop tank filling levels. Preferably, the method further comprises a step of adjusting the calculated current crop tank filling level in dependence of the second trigger signal.

The method according to the invention therewith delivers a plurality of advantages not previously obtained in the prior art grain tank filling level monitoring systems. In addition to two or more crop tank sensors, which can be relatively simple mechanical sensors, this new method does not require any complex and expensive crop flow sensors upstream or downstream the crop tank. The only additional input needed for calibrating the average yield parameter and real-time monitoring of the crop tank filling level is the travelled distance, which can easily be obtained using inexpensive and highly reliable known measurement tools that are probably already present in the harvester for other purposes, like wheel sensors or GPS modules. Despite the lack of expensive crop flow sensors, the method according to the invention is at least as accurate as the known methods described above. Each time one of the crop tank sensors is triggered, the average yield parameter can be calibrated. Variations in crop, harvester trajectory and external circumstances that influence the yield are thus registered and processed almost instantaneously and the crop tank filling level can be monitored accurately and continuously.

The method according to the invention may further comprise a step of outputting the calculated current crop tank filling level. Such output may, e.g., be visually or audible. A notification may be provided when the crop tank filling level reaches a predetermined level, e.g. to warn the operator that it's time to order a haul vehicle and unload the harvested crop from the crop tank. Visual output may include representation of the harvester, for example a side view, possibly as cross section, on a display, in the cab or remotely, whereby the actual crop tank filling level is shown as a line and/or a zone marked with a colour and/or pattern. Colour and/or pattern of line and/or zone can be different for tank filling and for tank unloading. Additionally, also the maximum crop tank filling level may be shown, including a certain margin.

In an embodiment of the invention, the estimated harvesting yield is further based on an effective header width of a header of the agricultural harvester. The effective header width is herein defined as the part of the header that is actually cutting crop. In its simplest form, the effective header width is a fixed parameter of the header of the agricultural harvester. In a grain header, the effective header width may, e.g., be equal to the total width (in meters) of a cutter bar. In a row dependent corn header, the effective header width may, e.g., be equal to a total number of row units of the header.

Preferably, the effective header width is adapted when only a portion of the full header width is being used for harvesting. This brings the advantage that the estimate of the crop tank filling level can be kept accurate when only a portion of the full header width is used for harvesting, e.g. when reaching the end of the field. The effective header width may be determined using, e.g., any combination of at least one of the following:
- a camera system with a field of view that comprises a full width of a cutter bar of the header,
- a crop sensor mounted at a lateral end of the header and configured to measure a smallest lateral distance between the crop sensor and crop still standing on the field just ahead of the header,
- real time position data combined with a field map indicating crop containing field areas, and
- cutter bar sensors configured to detect a portion of the cutter bar that is cutting the standing crop.

When the harvesting starts, an initial predetermined average yield parameter is assumed. This average yield parameter may, e.g., be provided by the user or directly related to the type of crop that is harvested. Alternatively, the average yield parameter may be based on field information that is available in farm management software used by the user of the harvester.

Even when the average yield parameter is calibrated each time one of the crop tank sensors is triggered, further improvements of the responsiveness and accuracy of the method according to the invention can be obtained by updating and adjusting the average yield parameter in the periods between two crop tank sensor trigger signals. For doing so, the method according to the invention may make use of a pre-established yield map and information about a current position of the agricultural harvester relative to the pre-established yield map. Alternatively (or additionally), camera images may be used of crop still standing on the field, just ahead of the agricultural harvester.

The method according to the invention may be adapted to also work while unloading the harvested crop from the crop tank. In that case, the method may further comprise the steps of:
- after receiving the first trigger signal, estimating an unloaded volume of harvested crop based on a length of an unloading period and a predetermined average unload parameter,
- calculating the current crop tank filling level, further based on the estimated unloaded volume, and
- upon receiving the second trigger signal, calibrating the predetermined average unload parameter based on the calculated current crop tank filling level and the first and second crop tank filling levels.

For determining the predetermined average unload parameter, various parameters may be taken into account, e.g. crop type, the moisture level of the harvested crop, the engine speed of the engine of the agricultural harvester, the rotational speed of an unload auger of the agricultural harvester, or the measured power consumption of the unload auger.

According to a further aspect of the invention, an agricultural harvester is provided comprising a crop tank, a memory and a controller. The crop tank comprises a first crop tank sensor for providing a first trigger signal corresponding to a first crop tank filling level and a second crop tank sensor for providing a second trigger signal corresponding to a second crop tank filling level. The second crop tank filling level is different from the first crop tank filling level. The memory is configured for storing a predetermined average yield parameter. The controller is operatively coupled to the memory and the first and second crop tank sensors and configured to perform a method as described above.

### BRIEF DESCRIPTION OF THE DRAWINGS

Embodiments of the invention will now be described by way of example with reference to the accompanying drawings, in which:
Figure 1 schematically shows an agricultural harvester in the form of a combine harvester.
Figure 2 schematically shows a top view of a combine harvester, harvesting in a field.
Figure 3 schematically shows a top view of a combine harvester, harvesting in another part of the field.

### DETAILED DESCRIPTION

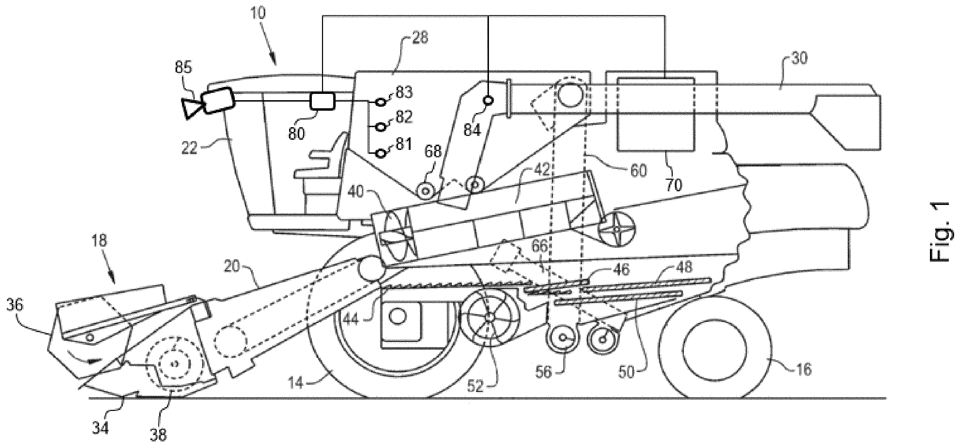

Figure 1 shows an agricultural harvester in the form of a combine harvester 10, which generally includes front and rear ground engaging wheels 14, 16, a header 18, a feeder 20, an operator cabin 22, a threshing and separation system, a cleaning system, a grain tank 28 and an unloading tube 30. The wheels 14, 16 as well as many of the functional parts of the combine harvester 10 are mechanically or hydraulically driven using power delivered by an engine 70. It should be appreciated that while the agricultural harvester is shown as a rotary combine harvester 10, the agricultural harvester according to the present invention may be embodied by any harvester that allows for crop material to be harvested and temporarily stored in a crop tank that is unloaded when full or when otherwise desired, e.g. after having harvested all crop on the field. Exemplary agricultural harvesters that may benefit from the current invention are, e.g., different types of combine harvesters, coffee harvesters, grape harvesters and olive harvesters.

A header 18 is mounted to the front of the combine harvester 10 and includes a cutter bar 34 for severing crops from a field during forward motion of the combine harvester 10. A rotatable reel 36 feeds the crop into the header 18, and a double auger 38 feeds the severed crop laterally from each side towards the feeder 20. The feeder 20 conveys the severed crop to the threshing and separating system.

The threshing and separating system is of the axial-flow type and comprises a threshing rotor 40 at least partially located and rotatable within a threshing drum 42. The threshing drum may take the form of a perforated concave. Grain from the severed crop is threshed and separated from the MOG by the action of the threshing rotor 40 within the threshing drum 42. Larger elements of MOG, such as stalks and leaves do not pass through the perforations in the threshing drum 42 and are discharged from the rear of the combine harvester 10. Grain and smaller elements of MOG (small MOG henceforth), such as chaff, dust and straw are small enough to fall through the perforations in the threshing drum 42.

Grain and small MOG that has successfully passed the threshing and separating system falls onto a preparation pan 44 and is conveyed towards the cleaning system. The cleaning system comprises a series of sieves 46, 48, 50 and a cleaning fan 52. The series of sieves 46, 48, 50 includes a pre-cleaning sieve 46, an upper (or chaffer) sieve 48 and a lower (or shoe) sieve 50. The cleaning fan 52 generates an airflow through the sieves 46, 48, 50 that impinges on the grain and small MOG thereon. The small MOG is typically lighter than the grain and is therefore separated from the grain as it becomes airborne. The small MOG is subsequently discharged from the combine harvester 10 at the rear end of the upper and lower sieves 48, 50.

The preparation pan 44 and pre-cleaning sieve 46 oscillate in a fore-to-aft manner to transport the grain and small MOG to the upper surface of the upper sieve 48. The upper sieve 48 is arranged vertically above the lower sieve 50 and also oscillate in a for-to-aft manner such that the grain and small MOG are spread across the two sieves 48, 50, while also permitting cleaned grain to pass through openings in the sieves 48, 50 under the action of gravity. Cleaned grain falls to a clean grain auger 56 that is positioned below and in front of the lower sieve 50 and spans the width of the combine harvester 10. The clean grain auger 56 conveys the cleaned grain laterally to a vertical grain elevator 60, which is arranged to transport the cleaned grain to the grain tank 28. Once in the grain tank 28, grain tank augers 68 at the bottom of the grain tank convey the cleaned grain laterally within the grain tank 28 to an unloading tube 30 for discharge from the combine harvester 10 into a container of a haul vehicle, such as a grain cart.

One or more controllers 80 are provided for electronically controlling many of the functional parts of the combine harvester. E.g., the controller may be configured to control the travel speed and direction of the combine harvester 10, the rotational speeds of the threshing rotor 40 and the cleaning fan 52, or the shaking frequency of the sieves 46, 48, 50. According to the invention, the controller 80 is further configured to continuously and accurately determine the filling level of the grain tank 28. The new system for measuring the grain tank filling level uses two or more crop tank sensors 81, 82, 83 that are installed at different levels inside the grain tank 28. For this purpose, cheap and robust mechanical sensors 81, 82, 83 can be used that provide trigger signals as soon as the grain tank 28 is filled up to at least the level of the respective sensors 81, 82, 83. The exact volume of grain that is stored between two consecutive grain tank filling levels (or a reliable approximation thereof) may, e.g., be determined from an accurate 3D model, such as a CAD model, of the grain tank 28. However, to take into account the fact that, in practice, the surface of the grain in the grain tank 28 is not nicely flat during filling, the volume added for filling the grain tank 28 between two successive crop tank sensors 81, 82, 83 can be determined in a calibration experiment. In similar ways, the additional grain tank volume above the topmost crop tank sensor 83 may be determined.

When starting the harvest with an empty grain tank 28, the harvested grain will start to fill up the grain tank 28 until the harvested grain reaches the level of the first and lowest crop tank sensor 81. At that point, the first crop tank sensor 81 sends a first trigger signal to the controller 80. If the harvesting continues, the harvested grain will eventually reach the second and third crop tank sensors 82, 83 and will send a second and third trigger signal to the controller 80 when this happens. When unloading the grain tank 28 into the container of a haul vehicle, the grain tank filling level decreases. As the grain tank filling level falls below the level of the third, second and first crop tank sensor, the respective sensor 83, 82, 81 is 'untriggered', which will be registered by the controller 80. Using just the signals from the crop tank sensors 81, 82, 83, the grain tank filling level monitoring system would only be capable of providing discrete updates of the grain tank filling level.

However, as already explained above, an efficient use of the full capacity of the grain tank 28 and the time and fuel of the combine harvester 10 and the haul vehicle(s), it is highly desirable to provide a continuously updated and accurate reading of the current grain tank filling level. For this purpose, the grain tank filling level monitoring system according to the invention continuously monitors the amount (i.e. volume) of grain that enters and leaves the grain tank 28.

The volume of unloaded grain may, e.g., be determined using an auger sensor 84 that measure the rotational speed of an unload auger in the unload tube 30. Alternatively, an auger sensor 84 may measure the power that is actually used for rotating the unload auger and pushing the grain through the unload tube 30. The inventors have found that there also is a strong and direct, almost linear, relation between the engine speed during unloading and the volume of actually unloaded grain. Using this relation, the actual volume of unloaded grain can be easily determined on the basis of just the engine speed during unloading. If a linear relation (*y* = *a* + *b* * *x*) is assumed, this relation will be characterised by two coefficients (*a*, *b*)*.* At first, when the harvesting starts, these coefficients may take some predetermined values, possibly dependent on crop type, geographical location, information from previous harvesting sessions, etc. While unloading the first batch of grain, this predetermined relation is used to continuously update the current grain tank filling level. During the emptying of the grain tank into the container of the haul vehicle, the grain tank filling level falls below the level of the third crop tank sensor 83 first and below the level of the second crop tank sensor 82 later. Because the volume of grain that is stored between those two levels is known, this can be used to calibrate the two coefficients immediately. By recalibrating the relation between engine speed and unloaded grain volume for each two consecutive trigger signals from the crop tank sensors 81, 82, 83, this relation is kept up to date and is automatically adjusted when circumstances, e.g. crop type, moisture content, etc., change. As a result, the controller 80 will always be able to provide an accurate prediction of the current grain tank filling level, during the unloading of the grain tank 28.

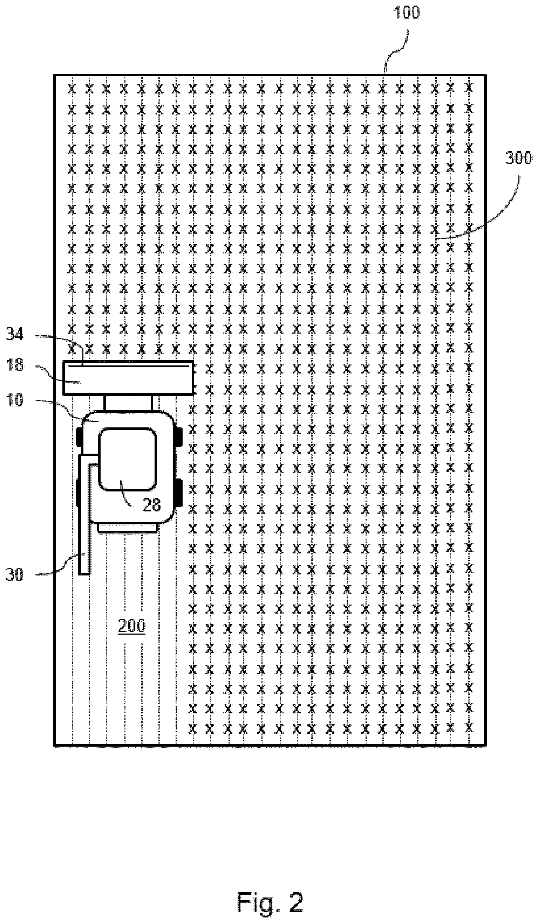

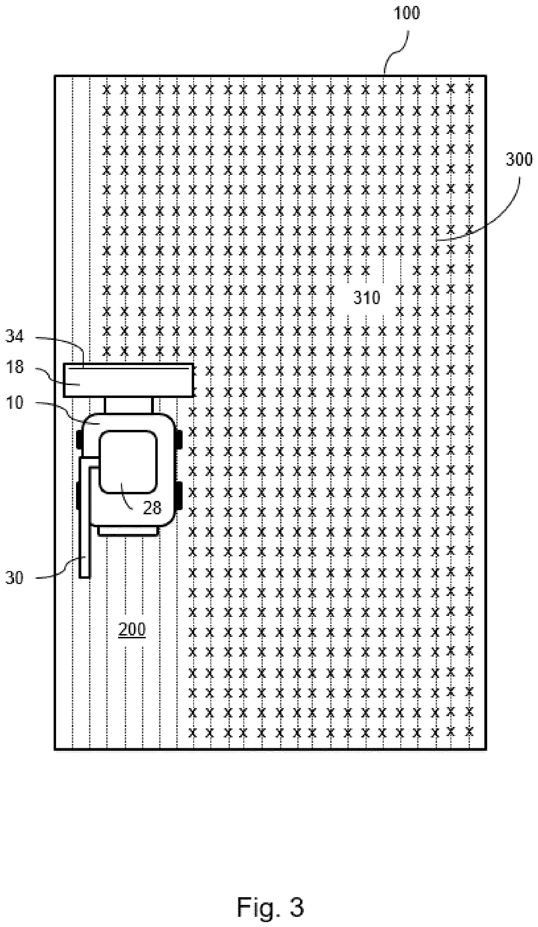

Even more important for an efficient harvesting process and coordination of the activities of the harvester 10 and the haul vehicle(s), is to continuously and accurately predict or determine the grain tank filling level while harvesting and filling the grain tank 28. In the past, this was typically done using a yield sensor in the grain elevator 60, which, as explained above, led to inaccurate and unreliable results. According to the invention, an estimation of the crop volume entering the grain tank is based on an assessment of the crop that is actually harvested. In its simplest form this estimation may be based on a travelled distance and a predetermined average yield parameter. The travelled distance will typically be measured using a positioning system, such as GPS, but can also be determined based on sensors monitoring the rotation of the wheels 14, 16 of the harvester. The average yield parameter may be a predetermined parameter that, e.g., depends on crop type and header width. Other factors may be taken into account when determining the average yield parameter, some of which will be discussed below with reference to figures 2 and 3.

An important aspect of the embodiment described herein is that the average yield parameter is continuously calibrated in a way similar to the calibration of the parameters that are used for estimating the volume of unloaded crop. When the harvesting starts, a predetermined average yield parameter may be used for continuously predicting the grain tank filling level. However, if the harvesting does not start with an empty grain tank or the initial grain tank filling level is otherwise unknown, the initial prediction may not bet very accurate. As soon as the first crop tank sensor 81 is triggered, the estimated current crop tank filling level may be corrected to the crop tank filling level associated with the first crop tank sensor 81. From there, the prediction of the current crop tank filling level is continuous, using the original predetermined average yield parameter. When more grain is harvested and the second crop tank sensor 82 is triggered, the controller may use the trigger signal from this crop tank sensor 82 not only to adjust the current crop tank filling level, but also to calibrate the average yield parameter. From thereon, the freshly calibrated average yield parameter is used for subsequent predictions of the crop tank filling level.

Nowadays, it is very common to continue harvesting crop, while the crop is unloaded into a container that is moved in parallel with the harvester 10. Using the calibrated parameters for determining the estimated yield and the estimated unloaded volume, the current crop tank filling level can also be continuously and accurately updated when loading and unloading occur simultaneously. If it is assumed that average yield has a higher variability than the calibrated unloading parameters, calibration may even continue is this situation. This means that the average yield parameter may also be calibrated when the triggering of one of the crop tank sensors 81, 82, 83 is followed by the untriggering of the same crop tank sensor 81, 82, 83 and even when the untriggering of the higher situated crop tank sensors 82, 83 is followed by an untriggering of a lower situated crop tank sensor 81, 82.

Figure 2 schematically shows a top view of a combine harvester 10, harvesting in a field 100. The field 100 comprises an 'empty' portion 200 where the harvester 10 has already taken the crop from the field 100 and a crop portion 300, wherein the crop is still standing. The most relevant features of the combine harvester 10 visible in this drawing are the header 18 with a cutter bar 34, the grain tank 28 and the unload tube 30. In order to make an accurate estimation of the volume of the harvested crop, i.e. the volume of the threshed and cleaned grain that ends up in the grain tank 28, the controller 80 multiplies the size of the harvested area 200 with the expected average yield per unit area. When a constant width of the harvested area 200 is assumed, the total volume of harvested crop can be obtained by multiplying the distance travelled while harvesting with an average yield per harvested meter.

In practice, the width of the harvested area 200 is not always the same. For example, different headers with different header widths may be used. The wider the header 18, the more crop is harvested per travelled meter. In a preferred embodiment, the total amount of harvested crop since the last triggering of one of the crop tank sensors 81, 82, 83 is the product of:
- meters travelled (while harvesting) since the triggering of the respective crop tank sensor 81, 82, 83,
- the effective header width (in meters), and
- a calibrated average yield parameter, representing an average yield per square meter.

Yield can therein be defined as the volume of crop that ends up in the grain tank 28. The effective header width will typically be smaller than the actual width of the header 18. Crop is only cut by the cutter bar 34. As is shown in figure 2, only crop caught by the cutter bar 34 is actually harvested. A narrow strip of crop standing at the outer right edge of the header 18 is left standing on the field 100.

Figure 3 schematically shows a top view of a combine harvester, harvesting in another part of the field 100. A first difference to notice, when comparing figure 3 to figure 2, is that the combine harvester 10 is driving over the field 100 with a substantial portion of the header 18 and the cutter bar 34 moving over a field portion with no crop. In a preferred embodiment, this may be detected, e.g., using a video camera 85 mounted at or near the roof of the cab 22. The video camera 85, may capture pictures of the field 100 and the crop in the vicinity of the cutter bar 34. With modern image recognition and analysis techniques, it can then be established that, e.g., only 70% of the total cutter bar width is actually being used for cutting crop. The controller 80 then temporarily adjusts the effective header width to 0.70 * the full header width in order to keep the grain tank filling level estimation as accurate as possible.

As an alternative or in addition to the use of the camera 85 for a more accurate measurement of the effective header width may be made using, e.g., crop sensors mounted on the side ends of the header 18, just in front of the cutter bar 34, and capable of measuring a distance to the crop standing in front of the header 18. Such crop sensors may, e.g., use a laser for measuring a distance to the crop. Also stereocamera, RADAR, LIDAR or ultrasound sensors may be used, mounted on the header 18, on the cab 22 or elsewhere with a direct line of sight to the crop.

If, with the help of e.g. a GPS, the controller 80 registers what portions of the field 100 are being harvested, this information may later be used to determine that the header 18 is at least partially moving over the harvested area 200. Pre-established yield maps can also be useful for determining where there is crop standing on the field and where there is not. Such pre-established yield maps may, e.g., be obtained via satellite images or using drones. Alternatively, information about the planting or seeding of the crop, earlier in the season could be used for establishing such a yield map, before the harvesting starts. On the basis of such a map, different average yield parameters may be used for different parts of the field 100. This can, e.g., be very useful when the crop portion 300 of the field 100 contains empty spots 310 where no crop can grow. Such empty spots 310 may, of course, also be detected using the video camera 85 or stereocamera, RADAR, LIDAR or ultrasound sensors as already discussed above.

In an even more advanced embodiment of the invention, images from the video camera 85 may not only be used for determining where there is crop and where there is no crop standing on the field 100, but also for determining the grain content of the crop in the areas where there is crop. Using the known grain tank filling levels of the crop tank sensors 81, 82, 83, the image processing algorithms used for such advanced image processing can be calibrated continuously to improve the accuracy of the system. Modern machine learning algorithms, e.g. using artificial neural networks, can be used for optimising the results.

The accurate and continuously updated grain tank filling levels obtained using the methods and systems according to the invention may be communicated to the operator of the combine harvester 10, e.g., on a display screen in the cab 22 or in an app on a smartphone or tablet computer, via a direct connection, a network or via the cloud. The updated grain tank filling level may be displayed together with the maximum filling level, to inform the operator about how much more grain can be stored in the grain tank 28. This maximum filling level may be equal to the total grain volume corresponding to the topmost crop tank sensor 83, or it may include an additional grain tank volume that is known to be available above that crop tank sensor 83. Preferably, some safety margin is taken into account when displaying a maximum filling level in order to avoid unintentionally overloading the grain tank 28. The information may be sent to a data server where more relevant farming data is stored and processed. Furthermore, the thus obtained grain tank filling levels, possibly in combination with the aforementioned pre-established yield map, can be used for predicting when the grain tank 28 will be full and haul vehicle may be instructed (by the driver or automatically by suitable software) to drive to the expected point where the unloading of the crop will take place. In addition thereto, the exact knowledge of the amount of grain that is unloaded into the container of the haul vehicle can be used for tracking and tracing the harvested grain after it has left the combine harvester 10.

## Claims

1. A method of determining a crop tank filling level in an agricultural harvester (10), the method comprising:
- receiving a first trigger signal from a first crop tank sensor (81, 82), the first trigger signal corresponding to a first crop tank filling level,
- after receiving the first trigger signal, estimating a harvesting yield based on a travelled distance and a predetermined average yield parameter,
- calculating a current crop tank filling level based on the first crop tank filling level and the estimated harvesting yield,
- receiving a second trigger signal from a second crop tank sensor (82, 83), the second trigger signal corresponding to a second crop tank filling level, the second crop tank filling level being different from the first crop tank filling level, and
- upon receiving the second trigger signal, calibrating the predetermined average yield parameter based on the calculated current crop tank filling level and the first and second crop tank filling levels.

2. A method of determining a crop tank filling level as claimed in claim 1, further comprising a step of adjusting the calculated current crop tank filling level in dependence of the second trigger signal.

3. A method of determining a crop tank filling level as claimed in claim 1 or 2, further comprising a step of outputting the calculated current crop tank filling level.

4. A method of determining a crop tank filling level as claimed in any of the preceding claims, wherein the estimated harvesting yield is further based on an effective header width of a header (18) of the agricultural harvester (10).

5. A method of determining a crop tank filling level as claimed in claim 4, wherein the effective header width is a fixed parameter of the header (18) of the agricultural harvester (10).

6. A method of determining a crop tank filling level as claimed in claim 4, wherein the effective header width is determined using at least one of:
- a camera system (85) with a field of view that comprises a full width of a cutter bar (34) of the header (18),
- a crop sensor mounted at a lateral end of the header (18) and configured to measure a smallest lateral distance between the crop sensor and crop still standing on the field just ahead of the header,
- real time position data combined with a field map indicating crop containing field areas, and
- cutter bar sensors configured to detect a portion of the cutter bar (34) that is cutting the standing crop.

7. A method of determining a crop tank filling level as claimed in any of the preceding claims, wherein the predetermined average yield parameter is based on at least one of:
- a crop type,
- a pre-established yield map and information about a current position of the agricultural harvester (10) relative to the pre-established yield map, and
- camera images of crop still standing on the field, just ahead of the agricultural harvester (10).

8. A method of determining a crop tank filling level as claimed in any of the preceding claims, further comprising:
- after receiving a trigger signal from the second crop tank sensor (83, 82), estimating an unloaded volume of harvested crop based on a length of an unloading period and a predetermined average unload parameter,
- calculating the current crop tank filling level, further based on the estimated unloaded volume, and
- upon receiving a trigger signal from the first crop tank sensor (82, 81), calibrating the predetermined average unload parameter based on the calculated current crop tank filling level and the first and second crop tank filling levels.

9. A method of determining a crop tank filling level as claimed in claim 8, wherein the predetermined average unload parameter is based on at least one of:
- a crop type,
- a moisture level of the harvested crop,
- an engine speed of an engine (70) of the agricultural harvester (10),
- a rotational speed of an unload auger of the agricultural harvester (10), and
- a measured power consumption of the unload auger.

10. An agricultural harvester (10) comprising:
- a crop tank (28), the crop tank (28) comprising a first crop tank sensor (81, 82) for providing a first trigger signal corresponding to a first crop tank filling level, a second crop tank sensor (82, 83) for providing a second trigger signal corresponding to a second crop tank filling level, the second crop tank filling level being different from the first crop tank filling level,
- a memory configured for storing a predetermined average yield parameter, and
- a controller (80), operatively coupled to the memory and the first and second crop tank sensors (81, 82, 83) and configured to perform a method as claimed in any of the preceding claims.

## Patentansprüche

1. Verfahren zum Bestimmen eines Korntankfüllstands in einer landwirtschaftlichen Erntemaschine (10), wobei das Verfahren umfasst:
- Empfangen eines ersten Auslösesignals von einem ersten Korntanksensor (81, 82), wobei das erste Auslösesignal einem ersten Korntankfüllstand entspricht,
- nach dem Empfangen des ersten Auslösesignals: Schätzen eines Ernteertrags basierend auf einer zurückgelegten Distanz und einem vorbestimmten, durchschnittlichen Ertragsparameter,
- Berechnen eines gegenwärtigen Korntankfüllstands basierend auf dem ersten Korntankfüllstand und dem geschätzten Ernteertrag,
- Empfangen eines zweiten Auslösesignals von einem zweiten Korntanksensor (82, 83), wobei das zweite Auslösesignal einem zweiten Korntankfüllstand entspricht, wobei der zweite Korntankfüllstand sich von dem ersten Korntankfüllstand unterscheidet, und
- nach dem Empfangen des zweiten Auslösesignals: Kalibrieren des vorbestimmten, durchschnittlichen Ertragsparameters basierend auf dem berechneten, gegenwärtigen Korntankfüllstand und dem ersten und dem zweiten Korntankfüllstand.

2. Verfahren zum Bestimmen eines Korntankfüllstands nach Anspruch 1, das des Weiteren einen Schritt des Verstellens des berechneten, gegenwärtigen Korntankfüllstands in Abhängigkeit von dem zweiten Auslösesignal aufweist.

3. Verfahren zum Bestimmen eines Korntankfüllstands nach Anspruch 1 oder 2, das des Weiteren einen Schritt des Ausgebens des berechneten, gegenwärtigen Korntankfüllstands aufweist.

4. Verfahren zum Bestimmen eines Korntankfüllstands nach einem der vorhergehenden Ansprüche, wobei der geschätzte Ernteertrag des Weiteren auf einer effektiven Erntevorsatzbreite eines Erntevorsatzes (18) der landwirtschaftlichen Erntemaschine (10) basiert.

5. Verfahren zum Bestimmen eines Korntankfüllstands nach Anspruch 4, wobei die effektive Erntevorsatzbreite ein fester Parameter des Erntevorsatzes (18) der landwirtschaftlichen Erntemaschine (10) ist.

6. Verfahren zum Bestimmen eines Korntankfüllstands nach Anspruch 4, wobei die effektive Erntevorsatzbreite bestimmt wird unter Verwendung von zumindest einem aus:
- einem Kamerasystem (85) mit einem Sichtfeld, das eine volle Breite eines Messerbalkens (34) des Erntevorsatzes (18) umfasst,
- einem Erntegutsensor, der an einem lateralen Ende des Erntevorsatzes (18) befestigt ist und dazu eingerichtet ist, einen kleinsten lateralen Abstand zwischen dem Erntegutsensor und Erntegut, das noch genau vor dem Erntevorsatz auf dem Feld steht, zu messen,
- Echtzeit-Positionsdaten in Kombination mit einer Feldkarte, die Erntegut beinhaltende Feldbereiche kennzeichnet, und
- Messerbalkensensoren, die dazu eingerichtet sind, einen Abschnitt des Messerbalkens (34) zu ermitteln, der das stehende Erntegut schneidet.

7. Verfahren zum Bestimmen eines Korntankfüllstands nach einem der vorhergehenden Ansprüche, wobei der vorbestimmte, durchschnittliche Ertragsparameter auf zumindest einem der folgenden Elemente basiert:
- einem Korntyp,
- einer vorbestimmten Ertragskarte und Informationen über eine gegenwärtige Position der landwirtschaftlichen Erntemaschine (10) relativ zu der vorbestimmten Ertragskarte, und
- Kamerabildern von Erntegut, das noch genau vor der landwirtschaftlichen Erntemaschine (10) auf dem Feld steht.

8. Verfahren zum Bestimmen eines Korntankfüllstands nach einem der vorhergehenden Ansprüche, das des Weiteren aufweist:
- nach dem Empfangen eines Auslösesignals von dem zweiten Korntanksensor (83, 82): Schätzen eines ausgeladenen Volumens von geerntetem Erntegut basierend auf einer Länge einer Entladeperiode und einem vorbestimmten, durchschnittlichen Entladeparameter,
- Berechnen des gegenwärtigen Korntankfüllstands, ferner basierend auf dem geschätzten ausgeladenen Volumen, und
- nach dem Empfangen eines Auslösesignals von dem ersten Korntankfüllstandsensor (82, 81): Kalibrieren des vorbestimmten, durchschnittlichen Entladeparameters basierend auf dem berechneten, gegenwärtigen Korntankfüllstand und dem ersten und zweiten Korntankfüllstand.

9. Verfahren zum Bestimmen eines Korntankfüllstands nach Anspruch 8, wobei der vorbestimmte, durchschnittliche Entladeparameter basierend auf zumindest einem aus den folgenden Elementen bestimmt wird:
- einem Korntyp,
- einem Feuchtigkeitsniveau des geernteten Ernteguts,
- einer Motordrehzahl eines Motors (70) der landwirtschaftlichen Erntemaschine (10),
- einer Drehzahl einer Entladeförderschnecke der landwirtschaftlichen Erntemaschine (10), und
- einem gemessenen Leistungsverbrauch der Entladeförderschnecke.

10. Landwirtschaftliche Erntemaschine (10) mit:
- einem Korntank (28), wobei der Korntank (28) einen ersten Korntanksensor (81, 82) zum Bereitstellen eines ersten Auslösesignals, das einem ersten Korntankfüllstand entspricht, und einen zweiten Korntanksensor (82, 83) zum Bereitstellen eines zweiten Auslösesignals, das einem zweiten Korntankfüllstand entspricht, aufweist, wobei der zweite Korntankfüllstand sich von dem ersten Korntankfüllstand unterscheidet,
- einem Speicher, der dazu eingerichtet ist, einen vorbestimmten, durchschnittlichen Ertragsparameter zu speichern, und
- einem Steuergerät (80), das wirkend mit dem Speicher und dem ersten und zweiten Korntanksensor (82, 83) gekoppelt ist und dazu eingerichtet ist, ein Verfahren nach einem der vorhergehenden Ansprüche auszuführen.

## Revendications

1. Un procédé de détermination d'un niveau de remplissage de réservoir de récolte dans une moissonneuse agricole (10), le procédé comprenant :
- la réception d'un premier signal de déclenchement de la part d'un premier capteur de réservoir de récolte (81, 82), le premier signal de déclenchement correspondant à un premier niveau de remplissage du réservoir de récolte,
- une fois le premier signal de déclenchement reçu, l'estimation d'un rendement de récolte en fonction d'une distance parcourue et d'un paramètre de rendement moyen prédéterminé,
- le calcul du niveau de remplissage actuel du réservoir de récolte en fonction du premier niveau de remplissage du réservoir de récolte et du rendement de récolte estimé,
- la réception d'un second signal de déclenchement d'un second capteur de réservoir de récolte (82, 83), le second signal de déclenchement correspondant à un second niveau de remplissage de réservoir de récolte, le second niveau de remplissage du réservoir de récolte étant différent du premier niveau de remplissage du réservoir de récolte, et
- à la réception du second signal de déclenchement, l'étalonnage du paramètre de rendement moyen prédéterminé en fonction du niveau de remplissage actuel calculé du réservoir de récolte ainsi que du premier et du second niveau de remplissage du réservoir de récolte.

2. Un procédé de détermination d'un niveau de remplissage de réservoir de récolte selon la revendication 1, comprenant en outre une étape d'ajustement du niveau de remplissage actuel calculé du réservoir de récolte en fonction du second signal de déclenchement.

3. Un procédé de détermination d'un niveau de remplissage de réservoir de récolte selon la revendication 1 ou la revendication 2, comprenant en outre une étape de sortie du niveau de remplissage actuel calculé du réservoir de récolte.

4. Un procédé de détermination d'un niveau de remplissage de réservoir de récolte selon l'une quelconque des revendications précédentes, dans lequel le rendement de récolte estimé est en outre basé sur une largeur effective d'un organe de coupe (18) de la moissonneuse agricole (10).

5. Un procédé de détermination d'un niveau de remplissage de réservoir de récolte selon la revendication 4, dans lequel la largeur effective de l'organe de coupe est un paramètre fixe de l'organe de coupe (18) de la moissonneuse agricole (10).

6. Un procédé de détermination d'un niveau de remplissage de réservoir de récolte selon la revendication 4, dans lequel la largeur effective de l'organe de coupe est déterminée à l'aide d'au moins un élément parmi les suivants :
- un système de caméra (85) avec un champ de vision qui comprend toute la largeur d'une barre de coupe (34) de l'organe de coupe (18),
- un capteur de récolte monté à une extrémité latérale de l'organe de coupe (18) et configuré pour mesurer une plus petite distance latérale entre le capteur de récolte et les cultures encore debout dans le champ, juste devant l'organe de coupe
- des données de position en temps réel combinées à un plan cadastral indiquant les zones de culture contenant des champs, et
- des capteurs de barre de coupe configurés pour détecter une partie de la barre de coupe (34) qui coupe la récolte sur pied.

7. Un procédé de détermination d'un niveau de remplissage de réservoir de récolte selon l'une quelconque des revendications précédentes, dans lequel le paramètre de rendement moyen prédéterminé est basé sur au moins un des éléments suivants :
- un type de récolte,
- une carte de rendement préétablie et des informations sur la position actuelle de la moissonneuse agricole (10) par rapport à la carte de rendement préétablie, et
- des images de caméra de la récolte encore debout dans le champ, juste devant la moissonneuse agricole (10).

8. Un procédé de détermination d'un niveau de remplissage de réservoir de récolte selon l'une quelconque des revendications précédentes, comprenant en outre :
- après réception d'un signal de déclenchement de la part du second capteur du réservoir de récolte (83, 82), l'estimation d'un volume déchargé de matériaux récoltés en fonction de la durée d'une période de déchargement et d'un paramètre de déchargement moyen prédéterminé,
- le calcul du niveau actuel de remplissage du réservoir de récolte, en outre basé sur le volume déchargé estimé, et
- à la réception d'un signal de déclenchement de la part du premier capteur de réservoir de récolte (82, 81), l'étalonnage du paramètre de déchargement moyen prédéterminé en fonction du niveau de remplissage actuel calculé du réservoir de récolte ainsi que du premier et du second niveau de remplissage du réservoir de récolte.

9. Un procédé de détermination d'un niveau de remplissage de réservoir de récolte selon la revendication 8, dans lequel le paramètre de déchargement moyen prédéterminé est basé sur au moins un des éléments suivants :
- un type de récolte,
- un taux d'humidité des matériaux récoltés,
- un régime moteur d'un moteur (70) de la moissonneuse agricole (10),
- une vitesse de rotation d'une vis de déchargement de la moissonneuse agricole (10), et
- une consommation d'énergie mesurée de la vis de déchargement.

10. Une moissonneuse agricole (10) comprenant :
- un réservoir de récolte (28), le réservoir de récolte (28) comprenant un premier capteur de réservoir de récolte (81, 82) pour fournir un premier signal de déclenchement correspondant à un premier niveau de remplissage du réservoir de récolte, un second capteur de réservoir de récolte (82, 83) pour fournir un second signal de déclenchement correspondant à un second niveau de remplissage de réservoir de récolte, le second niveau de remplissage du réservoir de récolte étant différent du premier niveau de remplissage du réservoir de récolte,
- une mémoire configurée pour stocker un paramètre de rendement moyen prédéterminé, et
- un contrôleur (80), couplé fonctionnellement à la mémoire ainsi qu'au premier et au second capteur de réservoir de récolte (81, 82, 83) et configuré pour mettre en œuvre un procédé selon l'une quelconque des revendications précédentes.
